(19) Europäisches Patentamt
European Patent Office
Office européen des brevets

(11) EP 3 208 107 B1

(12) EUROPEAN PATENT SPECIFICATION

(45) Date of publication and mention of the grant of the patent:
**17.04.2019 Bulletin 2019/16**

(21) Application number: **17154970.2**

(22) Date of filing: **07.02.2017**

(51) Int Cl.:
***B60C 1/00*** *(2006.01)* ***C08L 15/00*** *(2006.01)*

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2016 JP 2016029076**

(43) Date of publication of application:
**23.08.2017 Bulletin 2017/34**

(73) Proprietor: **Sumitomo Rubber Industries, Ltd.**
**Kobe-shi,**
**Hyogo-ken 651-0072 (JP)**

(72) Inventors:
- **YAMASHIRO, Yuhei**
**Kobe-shi, Hyogo 651-0072 (JP)**
- **NAKAZONO, Takeo**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 1 206 393**
**EP-A1- 1 258 498**
**EP-A1- 2 757 131**
**EP-A1- 2 881 432**
**WO-A1-2008/119465**

- **DATABASE WPI Week 200866 Thomson Scientific, London, GB; AN 2008-L26055 XP002770505, & JP 2008 184517 A (BRIDGESTONE CORP) 14 August 2008 (2008-08-14)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a pneumatic tire formed from a specific rubber composition.

### BACKGROUND ART

With the recent increase in concern about environmental issues, the demand for fuel efficient automobiles has been increasing. There is also a need for rubber compositions for automotive tires having higher fuel economy. For example, rubber compositions containing conjugated diene polymers such as polybutadiene or butadiene-styrene copolymers and filler such as carbon black or silica are used in automotive tires.

Patent Literature 1, for example, proposes a method for improving fuel economy by using a diene rubber (modified rubber) that has been modified with an organosilicon compound containing an amino group and an alkoxy group. Although such conventional techniques improve fuel economy, it is also important from economic and safety standpoints to ensure sufficient abrasion resistance and tensile properties (rubber tensile strength). In the conventional techniques, unfortunately, the abrasion resistance, which is in a trade-off relationship with fuel economy, is insufficient to solve this challenge, and rubber chipping can also be caused. Thus, it is difficult to simultaneously improve fuel economy, rubber tensile strength, and abrasion resistance.

Antioxidants and wax are incorporated into tires to prevent degradation caused by heat during running or by ozone in the air. However, if the amount of antioxidants and wax is increased for longer life of tires, these components may migrate to the tire surface to spoil the appearance of the tires. Therefore, a need exists for techniques for improving heat resistance and ozone resistance without increasing the amount of antioxidants and wax.

Patent Literature 2 proposes a method for improving rubber tensile strength, abrasion resistance, and other properties by the use of a hydrogenated diene polymer.

EP 2 757 131 A1 discloses a crosslinked rubber composition, containing 1 to 99 parts by mass of a vinyl aromatic copolymer rubber comprising 5 to 70% by mass of a vinyl aromatic monomer unit and 0.1 to 30% by mass of a conjugated diene monomer unit.

EP 1 258 498 A1 discloses a hydrogenated polymer obtained by hydrogenating a conjugated diene polymer having an average vinyl bond content of 20% by weight or more and less than 40% by weight to a degree such that 85% or more of double bond residues in the conjugated diene unit portion are hydrogenated.

### CITATION LIST

### PATENT LITERATURE

Patent Literature 1: JP 2000-344955 A
Patent Literature 2: JP H2-147647 A

### SUMMARY OF INVENTION

### TECHNICAL PROBLEM

The method of Patent Literature 2 allows for improvement of rubber tensile strength and abrasion resistance while maintaining good fuel economy. Moreover, the inventors of the present invention have found, after research, that there are also improvements in heat resistance and ozone resistance.

Hydrogenated diene polymers (hereinafter, also referred to as hydrogenated copolymers) as used in Patent Literature 2 usually show slower cure rate than general-purpose rubbers used as tire materials (e.g. natural rubber, styrene-butadiene rubber, polybutadiene rubber). For this reason, if they are used in combination with general-purpose rubbers, the general-purpose rubbers are preferentially cured during vulcanization, so that the hydrogenated copolymers cannot exert their effect of improving rubber tensile strength or abrasion resistance. Therefore, hydrogenated copolymers are usually used alone. However, the studies of the present inventors have revealed that compounds whose rubber component consists only of hydrogenated copolymers have poor tear properties and inferior crack resistance as compared to conventional compounds.

The further studies of the present inventors have revealed that when hydrogenated copolymers and general-purpose rubbers are combined, a phase structure is formed which will prevent uniform diffusion of the force applied to

the rubber, thereby improving tear properties. In this case, however, as discussed above, the hydrogenated copolymers fail to produce the effect of improving rubber tensile strength or abrasion resistance due to the differences in cure rate between the hydrogenated copolymers and general-purpose rubbers. Further, the effect of the hydrogenated copolymers in improving heat resistance or ozone resistance also tends to deteriorate.

As described above, the conventional techniques have difficulty in achieving a balanced improvement in fuel economy, rubber tensile strength, abrasion resistance, tear properties, heat resistance, and ozone resistance.

The present invention aims to solve the above problems and provide a pneumatic tire that shows a balanced improvement in fuel economy, rubber tensile strength, abrasion resistance, tear properties, heat resistance, and ozone resistance.

SOLUTION TO PROBLEM

The present invention relates to a pneumatic tire, formed from a rubber composition, the rubber composition containing a first polymer and a second polymer, the first polymer being a hydrogenated copolymer that contains a structural unit derived from an aromatic vinyl compound and a structural unit derived from a conjugated diene compound and has a degree of hydrogenation of the conjugated diene portion of 75 mol% or more, the second polymer having a double bond-containing diene content of 20% by mass or less and a weight average molecular weight of 200,000 to 2,000,000, wherein the second polymer is at least one selected from the group consisting of hydrogenated copolymers having microstructures different from that of the first polymer, hydrogenated polybutadiene, ethylene-propylene-diene rubber, and halogenated butyl rubber.

The first polymer preferably has a weight average molecular weight of 200,000 to 2,000,000.

The first polymer preferably has a degree of hydrogenation of 90 mol% or more.

The first polymer is preferably a hydrogenated styrene-butadiene copolymer.

The first polymer is preferably a hydrogenated modified styrene-butadiene copolymer.

The first polymer preferably has a styrene content of 5% to 40% by mass.

The second polymer is at least one selected from the group consisting of hydrogenated copolymers having microstructures different from that of the first polymer, hydrogenated polybutadiene, ethylene-propylene-diene rubber, and halogenated butyl rubber.

ADVANTAGEOUS EFFECTS OF INVENTION

The pneumatic tire of the present invention is formed from a rubber composition which contains a specific hydrogenated copolymer (first polymer) and a specific polymer (second polymer) . It is thus possible to provide a pneumatic tire that shows a balanced improvement in fuel economy, rubber tensile strength, abrasion resistance, tear properties, heat resistance, and ozone resistance.

DESCRIPTION OF EMBODIMENTS

The pneumatic tire of the present invention is formed from a rubber composition. The rubber composition contains both a hydrogenated copolymer (first polymer) obtained by copolymerizing an aromatic vinyl compound and a conjugated diene compound to produce a copolymer containing a structural unit derived from the aromatic vinyl compound and a structural unit derived from the conjugated diene compound (hereinafter, also referred to as a copolymer of an aromatic vinyl compound and a conjugated diene compound) and hydrogenating the conjugated diene portion (the structural unit derived from the conjugated diene compound) of the copolymer to give a degree of hydrogenation of 75 mol% or more, and a polymer (second polymer) having a double bond-containing diene content within a specific range and a weight average molecular weight within a specific range.

The rubber composition in the present invention contains, in the rubber component, a hydrogenated copolymer (first polymer) obtained by hydrogenating the conjugated diene portion of a copolymer of an aromatic vinyl compound and a conjugated diene compound to a degree of hydrogenation of 75 mol% or more. This improves rubber tensile strength and abrasion resistance while maintaining or improving good fuel economy, and further provides good heat resistance and good ozone resistance.

The rubber composition in the present invention further contains a polymer (second polymer) having a double bond-containing diene content within a specific range and a weight average molecular weight within a specific range. This leads to the formation of a phase structure in the rubber composition, thereby ensuring good tear properties. Moreover, since, unlike general-purpose rubbers, the second polymer shows a cure rate similar to that of the first polymer, the incorporation of the second polymer advantageously does not deteriorate the effect of the first polymer in improving rubber tensile strength or abrasion resistance. Due to the foregoing effects, it is possible to provide a pneumatic tire that shows a balanced improvement in fuel economy, rubber tensile strength, abrasion resistance, tear properties, heat

resistance, and ozone resistance.

The rubber composition in the present invention is characterized by containing, in the rubber component, a hydrogenated copolymer (first polymer) obtained by hydrogenating the conjugated diene portion of a copolymer of an aromatic vinyl compound and a conjugated diene compound. Conventional rubbers contain a large number of double bonds where a crosslinking reaction can take place, thereby leading to variations in crosslink concentration which are considered to cause stress concentration that can initiate fracture. According to the present invention, the hydrogenation treatment reduces the number of double bonds to reduce the reactive sites for crosslinking. Thus, the variations in crosslink concentration are expected to decrease so that the stress concentration is relaxed, thereby resulting in improvements in abrasion resistance and other properties.

Examples of the aromatic vinyl compound include styrene, $\alpha$-methylstyrene, 1-vinylnaphthalene, 3-vinyltoluene, ethylvinylbenzene, divinylbenzene, 4-cyclohexylstyrene, and 2,4,6-trimethylstyrene. Each of these compounds may be used alone, or two or more of these may be used in combination. Among these examples, styrene is particularly preferred in view of practical aspects such as monomer availability and because then the effects of the present invention can be more suitably achieved.

Examples of the conjugated diene compound include 1,3-butadiene, isoprene, 1,3-pentadiene, 2,3-dimethylbutadiene, 2-phenyl-1,3-butadiene, and 1,3-hexadiene. Each of these compounds may be used alone, or two or more of these may be used in combination. Among these examples, 1,3-butadiene or isoprene is preferred, with 1,3-butadiene being more preferred, in view of practical aspects such as monomer availability and because then the effects of the present invention can be more suitably achieved.

The copolymer of an aromatic vinyl compound and a conjugated diene compound is preferably a copolymer of styrene and 1,3-butadiene (styrene-butadiene copolymer). The hydrogenated copolymer is thus preferably a hydrogenated styrene-butadiene copolymer. Furthermore, the hydrogenated styrene-butadiene copolymer is preferably a hydrogenated modified styrene-butadiene copolymer that has been modified as described later.

The styrene-butadiene copolymer can be produced by copolymerization of styrene and 1, 3-butadiene in any order, and may be produced by random copolymerization or block copolymerization, preferably by random copolymerization. The same is true for copolymers of aromatic vinyl compounds and conjugated diene compounds other than styrene-butadiene copolymers.

The degree of hydrogenation of the hydrogenated copolymer (the degree of hydrogenation of the conjugated diene portion of the copolymer of an aromatic vinyl compound and a conjugated diene compound) is 75 mol% or more, preferably 80 mol% or more, more preferably 90 mol% or more, still more preferably 93 mol% or more. If the degree of hydrogenation is less than 75 mol%, rubber tensile strength and abrasion resistance are not readily improved. The degree of hydrogenation of the hydrogenated copolymer is also preferably 99 mol% or less, more preferably 98 mol% or less. If the degree of hydrogenation is more than 99 mol%, the resulting rubber composition may become hard.

The degree of hydrogenation can be calculated from the rate of decrease in the intensity of a $^1$H-NMR spectrum corresponding to unsaturated bonds.

The hydrogenated copolymer preferably has a weight average molecular weight (Mw) of 200,000 or more, more preferably 400,000 or more. With the hydrogenated copolymer having a Mw of less than 200,000, good rubber tensile strength and good abrasion resistance may not be obtained. The Mw of the hydrogenated copolymer is also preferably 2,000,000 or less, more preferably 1,000,000 or less, still more preferably 700,000 or less. With the hydrogenated copolymer having a Mw of more than 2,000,000, processability tends to decrease.

Herein, the weight average molecular weight (Mw) and the number average molecular weight (Mn) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The hydrogenated copolymer preferably has a glass transition temperature (Tg) of -45°C or higher, more preferably -35°C or higher, still more preferably -30°C or higher. With the hydrogenated copolymer having a Tg of lower than -45°C, rubber tensile strength may decrease. The Tg of the hydrogenated copolymer is also preferably lower than -10°C, more preferably lower than -12. 5°C, still more preferably lower than -13°C, further preferably lower than -15°C, particularly preferably lower than -17.5°C, most preferably lower than -20°C. With the hydrogenated copolymer having a Tg of -10°C or higher, the rubber may harden at a low temperature of not higher than 0°C, thereby deteriorating durability such as abrasion resistance or rubber tensile strength.

The glass transition temperature (Tg) of the hydrogenated copolymer is measured as described later in EXAMPLES.

In the case where the hydrogenated copolymer is a hydrogenated styrene-butadiene copolymer, the hydrogenated styrene-butadiene copolymer preferably has a styrene content of 5% by mass or more, more preferably 10% by mass or more, still more preferably 15% by mass or more, particularly preferably 20% by mass or more, most preferably 25% by mass or more. With the hydrogenated styrene-butadiene copolymer having a styrene content of less than 5% by mass, sufficient grip performance may not be obtained. The styrene content of the hydrogenated styrene-butadiene

copolymer is also preferably 40% by mass or less, more preferably 35% by mass or less. With the hydrogenated styrene-butadiene copolymer having a styrene content of more than 40% by mass, sufficient rubber tensile strength and sufficient abrasion resistance may not be obtained, and fuel economy may also deteriorate. With the hydrogenated styrene-butadiene copolymer having a styrene content falling within the range indicated above, the effects of the present invention can be more suitably achieved.

The styrene content is measured as described later in EXAMPLES.

The hydrogenated copolymer, before being hydrogenated, preferably has a vinyl group content of 15% by mass or more, more preferably 25% by mass or more, still more preferably 35% by mass or more. With a vinyl group content of less than 15% by mass, sufficient grip performance may not be obtained. The vinyl group content of the hydrogenated copolymer, before being hydrogenated, is also preferably 80% by mass or less, more preferably 70% by mass or less, still more preferably 60% by mass or less. With a vinyl group content of more than 80% by mass, sufficient fuel economy or abrasion resistance may not be obtained.

The vinyl group content is measured as described later in EXAMPLES.

The hydrogenated copolymer may be synthesized, for example, by polymerizing an aromatic vinyl compound and a conjugated diene compound to produce a polymer and hydrogenating the polymer, specifically as follows.

<Method for producing copolymer>

(Polymerization method)

The copolymer of an aromatic vinyl compound and a conjugated diene compound may be polymerized by any method, including solution polymerization, vapor phase polymerization, and bulk polymerization, and particularly preferably by solution polymerization. The polymerization may be carried out either in a batch mode or in a continuous mode.

For solution polymerization, the monomer concentration (the combined concentration of styrene and 1, 3-butadiene in the case of a styrene-butadiene copolymer) in the solvent is preferably 5% by mass or more, more preferably 10% by mass or more. If the monomer concentration in the solvent is less than 5% by mass, the copolymer yield tends to be small, resulting in increased cost. The monomer concentration in the solvent is also preferably 50% by mass or less, more preferably 30% by mass or less. If the monomer concentration in the solvent is more than 50% by mass, the solution tends to become too viscous to stir easily, and thus polymerization tends not to occur easily.

(Polymerization initiator in anionic polymerization)

For anionic polymerization, any type of polymerization initiator may be used. Preferred are organic lithium compounds which preferably contain a C2-C20 alkyl group, such as ethyllithium, n-propyllithium, isopropyllithium, n-butyllithium, sec-butyllithium, tert-butyllithium, tert-octyllithium, n-decyllithium, phenyllithium, 2-naphthyllithium, 2-butylphenyllithium, 4-phenylbutyllithium, cyclohexyllithium, cyclopentyllithium, and reaction products of diisopropenylbenzene and butyllithium. In view of availability, safety and other aspects, preferred among these is n-butyllithium or sec-butyllithium.

The polymerization reaction may be carried out in the presence of a compound (R) obtained by mixing at least one of the organic lithium compounds mentioned above with a compound (B1) containing a functional group interactive with silica. In the polymerization in the presence of the compound (R), the functional group interactive with silica is introduced to the polymerization initiating terminal of the copolymer. Thus, the resulting copolymer has a modified polymerization initiating terminal. The term "interactive" herein means the formation of a covalent bond or an intermolecular force weaker than covalent bonds (e.g. electromagnetic forces between molecules such as ion-dipole interaction, dipole-dipole interaction, hydrogen bond, or van der Waals force) between molecules. The term "functional group interactive with silica" refers to a group having at least one atom interactive with silica such as a nitrogen atom, a sulfur atom, a phosphorus atom, or an oxygen atom.

The compound (R) is preferably a reaction product of an organic lithium compound and a nitrogen-containing compound such as a secondary amine compound, among others. Specific examples of the nitrogen-containing compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tert-butyldimethylsilyl)piperazine, and 1,3-ditrimethylsilyl-1,3,5-triazinane. The polymerization in the presence of the compound (R) may be carried out by preliminarily mixing an organic lithium compound with a compound (B1) to prepare a compound (R) and adding the compound (R) to the polymerization system, followed by polymerization. Alternatively, it may be carried out by adding an organic lithium compound and a compound (B1) to the polymerization system and mixing them in the polymerization system to prepare a compound (R), followed by polymerization.

(Method for anionic polymerization)

The production of the copolymer through anionic polymerization using the polymerization initiator may be carried out by any method including conventionally known methods.

Specifically, monomers, for example, styrene and 1,3-butadiene may be anionically polymerized in an organic solvent inert to the reaction, for example, a hydrocarbon solvent such as an aliphatic, alicyclic, or aromatic hydrocarbon compound, using a polymerization initiator such as butyllithium, optionally in the presence of a randomizer to produce a target copolymer, e.g. a styrene-butadiene copolymer.

(Hydrocarbon solvent in anionic polymerization)

The hydrocarbon solvent is preferably a C3-C8 hydrocarbon solvent, and examples include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. Each of these solvents may be used alone, or two or more of these may be used in admixture.

(Randomizer in anionic polymerization)

The randomizer refers to a compound that has the function of controlling the microstructure of the conjugated diene portion of a copolymer, for example, increase of 1,2-butadiene units or 3,4-isoprene units, or the function of controlling the compositional distribution of monomer units in a copolymer, for example, randomization of styrene units and butadiene units in a styrene-butadiene copolymer. The randomizer is not particularly limited, and any known compound commonly and conventionally used as a randomizer may be used. Examples include ethers and tertiary amines, such as dimethoxybenzene, tetrahydrofuran, dimethoxyethane, diethylene glycol dibutyl ether, diethylene glycol dimethyl ether, bis(tetrahydrofuryl)propane, triethylamine, pyridine, N-methylmorpholine, N,N,N',N'-tetramethylethylenediamine, and 1,2-dipiperidinoethane. Other examples include potassium salts such as potassium-t-amylate and potassium-t-butoxide; and sodium salts such as sodium-t-amylate. Each of these randomizers may be used alone, or two or more of these may be used in combination. The amount of the randomizer to be used per mol of the organic lithium compound is preferably 0.01 mole equivalents or more, more preferably 0.05 mole equivalents or more. If the amount of the randomizer is less than 0.01 mole equivalents, the added randomizer tends to produce a little effect, and thus randomization tends not to occur easily. The amount of the randomizer per mol of the organic lithium compound is also preferably 1,000 mole equivalents or less, more preferably 500 mole equivalents or less. If the amount of the randomizer is more than 1,000 mole equivalents, the reaction rate of monomers tends to change greatly, and randomization tends to be adversely affected.

The Tg of the copolymer can be controlled by varying the type or amount of the randomizer. For example, the Tg of the copolymer may be reduced by decreasing the amount of tetrahydrofuran.

(Reaction temperature)

The anionic polymerization may be carried out at any reaction temperature as long as the reaction suitably proceeds . Usually, the reaction temperature is preferably -10°C to 100°C, more preferably 25°C to 70°C.

(Modification step)

The active terminal of the copolymer obtained by the above polymerization step may be reacted with a compound (B2) containing a functional group interactive with silica to introduce the functional group interactive with silica to the polymerization terminating terminal of the copolymer. This step allows the copolymer to have a modified polymerization terminating terminal. The term "terminal" herein refers to an end portion of the molecular chain, excluding monomer-derived structures containing carbon-carbon double bonds.

The copolymer used in the modification reaction (hereinafter, also referred to as terminal modification reaction) may be any copolymer which has an active terminal with an unmodified or modified polymerization initiating terminal. The compound (B2) may be any compound which contains a functional group interactive with silica and is reactable with the polymerization active terminal. Preferable specific examples of the compound (B2) include:

(I) a compound (B2-1) represented by the following formula (1):

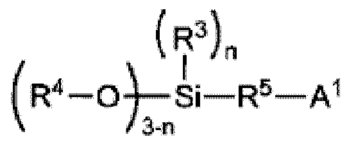

(1)

wherein $A^1$ represents a monovalent functional group which contains no active hydrogen but contains at least one selected from the group consisting of a nitrogen atom, a phosphorus atom, and a sulfur atom, and is bound to $R^5$ through a nitrogen atom, a phosphorus atom, or a sulfur atom; $R^3$ and $R^4$ each represent a hydrocarbyl group; $R^5$ represents a hydrocarbylene group; and n represents an integer of 0 to 2, provided that when two or more $R^3$ or $R^4$ groups are present, they may be the same or different;

(II) a compound (B2-2) that has, in the molecule, one or more functional groups (x1) of at least one type selected from the group consisting of a cyclic ether group, a (thio)carbonyl group, and an iso(thio)cyanate group, and one or more groups (x2) different from the functional groups (x1) which contains no active hydrogen but contains at least one selected from the group consisting of a nitrogen atom, a phosphorus atom, an oxygen atom, and a sulfur atom, provided that at least one of the nitrogen, phosphorus, and sulfur atoms may be protected by a trisubstituted hydrocarbylsilyl group; and

(III) a compound (B2-3) having two or more iso(thio)cyanate groups in the molecule. Each of these compounds (B2) may be used alone, or two or more of these compounds (B2) may be used in combination. Herein, the term "(thio)carbonyl group" refers to a carbonyl group and a thiocarbonyl group; and the term "iso(thio)cyanate group" refers to an isocyanate group and an isothiocyanate group.

The hydrocarbyl group for $R^3$ and $R^4$ in formula (1) is preferably a linear or branched C1-C20 alkyl group, a C3-C20 cycloalkyl group, or a C6-C20 aryl group.

$R^5$ is preferably a linear or branched C1-C20 alkanediyl group, a C3-C20 cycloalkylene group, or a C6-C20 arylene group.

Preferably, n is 0 or 1 in order to increase the reactivity with the copolymer.

$A^1$ contains at least one selected from the group consisting of a nitrogen atom, a phosphorus atom, and a sulfur atom (hereinafter, also referred to as a specific atom), and is bound to $R^5$ through the specific atom. The specific atom is bound to no active hydrogen, and may be protected by, for example, a trisubstituted hydrocarbylsilyl group. The term "active hydrogen" herein refers to a hydrogen atom bound to an atom other than a carbon atom, and preferably refers to a hydrogen atom having a bond energy lower than the carbon-hydrogen bond of polymethylene.

Preferably, $A^1$ is a group that can be converted to an onium ion by the action of an onium salt-forming agent. The compound (B2) containing such a group ($A^1$) can impart excellent shape-retaining properties to the copolymer to be modified.

Specific examples of $A^1$ include a nitrogen-containing group in which two hydrogen atoms of a primary amino group are substituted by two protecting groups; a nitrogen-containing group in which one hydrogen atom of a secondary amino group is substituted by one protecting group; a tertiary amino group; an imino group; a pyridyl group; a phosphorus-containing group in which two hydrogen atoms of a primary phosphino group are substituted by two protecting groups; a phosphorus-containing group in which one hydrogen atom of a secondary phosphino group is substituted by one protecting group; a tertiary phosphino group; and a sulfur-containing group in which one hydrogen atom of a thiol group is substituted by one protecting group. Among these, groups containing a nitrogen atom are preferred because of their good affinity for silica. The term "protecting group" refers to a functional group that converts $A^1$ to a functional group inert to the polymerization active terminal, such as, for example, a trisubstituted hydrocarbylsilyl group.

Specific examples of the compound (B2-1) are described below. Examples of compounds containing both an alkoxysilyl group and a nitrogen-containing group in which two hydrogen atoms of a primary amine are substituted by two protecting groups, a nitrogen-containing group in which one hydrogen atom of a secondary amine is substituted by one protecting group, or a tertiary amino group include N,N-bis(trimethylsilyl)aminopropyltrimethoxysilane, N,N-bis(trimethylsilyl)aminopropylmethyldiethoxysilane, N,N',N'-tris(trimethylsilyl)-N-(2-aminoethyl)-3-aminopropyltriethoxysilane, and 3-(4-trimethylsilyl-1-piperazino)propylmethyldimethoxysilane.

Examples of compounds containing both an alkoxysilyl group and an imino group or a pyridyl group include N-(1,3-dimethylbutylidene)-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine, and trimethoxysilyl, methyldiethoxysilyl, or ethyldimethoxysilyl compounds corresponding to the foregoing triethoxysilyl compounds, N-(3-trimethoxysilylpropyl)-4,5-dihydroimidazole, N-(3-triethoxysilylpropyl)-4,5-dihydroimidazole, N-(3-trimethoxysilylpropyl)-4,5-imidazole, N-(3-triethoxysilylpropyl)-4,5-imidazole, 3-hexamethyleneiminopropyltrimethoxysilane, 3-hexamethyleneiminopropylmethyldimethoxysilane, and the foregoing compounds whose alkyl group and alkanediyl group are replaced with a C1-C6 alkyl group and a C1-C6 alkanediyl group, respectively.

Examples of compounds containing both an alkoxysilyl group and a phosphorus-containing group in which two hydrogen atoms of a primary phosphino group are substituted by two protecting groups, a phosphorus-containing group in which one hydrogen atom of a secondary phosphino group is substituted by one protecting group, a tertiary phosphino group, or a sulfur-containing group in which one hydrogen atom of a thiol group is substituted by one protecting group include P,P-bis(trimethylsilyl)phosphinopropylmethyldimethoxysilane, P,P-bis(trimethylsilyl)phosphinopropyltrimethoxysilane, 3-dimethylphosphinopropyltrimethoxysilane, 3-dimethylphosphinopropylmethyldimethoxysilane, 3-diphenylphosphinopropyltrimethoxysilane, 3-diphenylphosphinopropyltriethoxysilane, 3-diphenylphosphinopropylmethyldimethoxysilane, S-trimethylsilylmercaptopropylmethyldimethoxysilane, S-trimethylsilylmercaptopropyltrimethoxysilane, S-trimethylsilylmercaptopropyltriethoxysilane, S-trimethylsilylmercaptopropylmethyldiethoxysilane, and the foregoing compounds whose alkyl group and alkanediyl group are replaced with a C1-C6 alkyl group and a C1-C6 alkanediyl group, respectively. In addition, examples of compounds containing an iso(thio)cyanate group include 3-isocyanatopropyltrimethoxysilane and 3-isocyanatopropyltriethoxysilane.

In the compound (B2-2), the group (x2) is preferably a group that contains a nitrogen atom bound to no active hydrogen. Specific examples of such compounds include:

compounds containing a cyclic ether group, such as epoxy amine compounds, e.g. tetraglycidyl-1,3-bisaminomethylcyclohexane,

compounds containing a (thio)carbonyl group, such as 4-aminoacetophenones, e.g. 4-N,N-dimethylaminobenzophenone; bis(dihydrocarbylaminoalkyl)ketones, e.g. 1,7-bis(methylethylamino)-4-heptanone; dihydrocarbylaminoalkyl (meth)acrylates, e.g. 2-dimethylaminoethyl acrylate; hydrocarbylimidazolidinones, e.g. 1,3-dimethyl-2-imidazolidinone; N-hydrocarbylpyrrolidones, e.g. 1-phenyl-2-pyrrolidone; N-hydrocarbylcaprolactams, e.g. N-methyl-ε-caprolactam; N-dihydrocarbylformamides, e.g. N,N-diethylformamide; N,N-dihydrocarbylacetamides, e.g. N,N-dimethylacetamide; and (meth)acrylamides, e.g. N,N-dimethylacrylamide, and

compounds containing an iso(thio)cyanate group, such as 3-isocyanatopropyltrimethoxysilane.

Examples of the compound (B2-3) include 2,4-tolylene diisocyanate, 2,6-tolylene diisocyanate, diphenylmethane diisocyanate, naphthalene diisocyanate, triphenylmethane triisocyanate, p-phenylene diisocyanate, tris(isocyanatophenyl)thiophosphate, xylene diisocyanate, benzene-1,2,4-triisocyanate, naphthalene-1,2,5,7-tetraisocyanate, and 1,4-phenylene diisothiocyanate.

In particular, the compound (B2) is preferably a compound (B2-1) because of its high affinity for silica. When a silane compound (B2-1) is used, for example, silicon tetrachloride or an epoxy-containing compound (e.g. tetraglycidyl-1,3-bisaminomethylcyclohexane) may be used with the silane compound (B2-1) to control the Mooney viscosity of the modified copolymer. The compounds (B2) mentioned above all have the same function in that they allow the resulting modified copolymer to have a modified polymerization terminating terminal. Accordingly, those which are not disclosed in the EXAMPLES later can also be used in the present invention. A structure represented by the formula (1-1) below is introduced to the polymer terminal by the reaction between the compound of formula (1) and the copolymer to be modified.

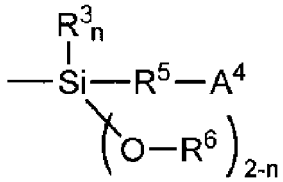

(1-1)

In formula (1-1), $R^6$ represents a hydrogen atom or a hydrocarbyl group, and when two or more $R^6$ groups are present, they may be the same or different. Examples of the hydrocarbyl group for $R^6$ include those listed above for $R^3$ and $R^4$ in formula (1). $A^4$, $R^3$, $R^5$ and n are as defined for $A^1$, $R^3$, $R^5$ and n, respectively, in formula (1).

The terminal modification reaction may be performed as a solution reaction, for example. The solution reaction may be carried out using the solution containing unreacted monomers obtained after completion of the polymerization reaction in the polymerization step, or a solution prepared by isolating the copolymer from the above solution and dissolving it in an appropriate solvent such as cyclohexane. The terminal modification reaction may be carried out either batchwise or continuously. Here, the compound (B2) may be added in any manner, such as at one time, in portions, or continuously.

The amount of the compound (B2) used in the terminal modification reaction may be selected appropriately according to the type of compound used in the reaction. The amount of the compound (B2) is preferably 0.1 mole equivalents or more, more preferably 0.3 mole equivalents or more relative to the metal atom of the polymerization initiator involved in the polymerization reaction. With 0.1 mole equivalents or more of the compound (B2), the modification

reaction can proceed sufficiently, and the dispersibility of silica can be suitably improved.

The temperature of the terminal modification reaction is usually the same as the temperature of the polymerization reaction, and is preferably -20°C to 150°C, more preferably 0°C to 120°C, particularly preferably 20°C to 100°C. If the temperature of the modification reaction is low, the viscosity of the modified copolymer tends to increase, while if the temperature of the modification reaction is high, the polymerization active terminal can be easily deactivated. The duration of the modification reaction is preferably one minute to five hours, more preferably two minutes to one hour.

(Termination of reaction)

The anionic polymerization may be terminated by addition of a reaction terminator usually used in this technical field. Examples of the reaction terminator include polar solvents containing active protons such as acetic acid, and methanol, ethanol, isopropanol, and other alcohols, and mixtures of the foregoing. Other examples include mixtures of the foregoing polar solvents and non-polar solvents such as hexane or cyclohexane. Usually, the amount of the reaction terminator to be added is sufficient when it is about equal to or twice the molar amount of the initiator for anionic polymerization.

<Coupling>

In the method for producing the copolymer, a coupling agent may be added to the hydrocarbon solution of the copolymer at any time from the initiation of the polymerization of monomers until the polymer is recovered as described later. Examples of the coupling agent include compounds represented by the following formula (2-1):

$$R^1{}_aML_{4-a} \qquad (2\text{-}1)$$

wherein $R^1$ represents an alkyl group, an alkenyl group, a cycloalkenyl group, or an aryl group; M represents a silicon atom or a tin atom; L represents a halogen atom or a hydrocarbyloxy group; and a represents an integer of 0 to 2.

Examples of the coupling agent of formula (2-1) include silicon tetrachloride, methyltrichlorosilane, dimethyldichlorosilane, trimethylchlorosilane, tin tetrachloride, methyltrichlorotin, dimethyldichlorotin, trimethylchlorotin, tetramethoxysilane, methyltrimethoxysilane, dimethoxydimethylsilane, methyltriethoxysilane, ethyltrimethoxysilane, dimethoxydiethylsilane, diethoxydimethylsilane, tetraethoxysilane, ethyltriethoxysilane, and diethoxydiethylsilane.

In order to enhance the processability of the polymer, the amount of the coupling agent to be added is preferably 0.03 mol or more, more preferably 0.05 mol or more, per mol of the alkali metal derived from an alkali metal catalyst. In order to enhance fuel economy, the amount is preferably 0.4 mol or less, more preferably 0.3 mol or less.

<Hydrogenation method>

In the method for producing the hydrogenated copolymer, the copolymer described above is hydrogenated to obtain a hydrogenated copolymer having a degree of hydrogenation of 75 mol% or more. The hydrogenation of the copolymer advantageously improves heat resistance. If the degree of hydrogenation is low, the effects of improving rubber tensile strength and abrasion resistance are not sufficiently achieved.

The hydrogenation may be carried out by any method under any reaction condition, including known methods and known conditions. Usually, the hydrogenation is carried out at 20°C to 150°C under 0.1 to 10 MPa hydrogen pressure in the presence of a hydrogenation catalyst. The degree of hydrogenation can be selected by changing, for example, the amount of the hydrogenation catalyst, the hydrogen pressure during the hydrogenation reaction, or the duration of the reaction. The hydrogenation catalyst used may be usually a compound containing any of the metals of groups 4 to 11 of the periodic table. For example, compounds containing any of Ti, V, Co, Ni, Zr, Ru, Rh, Pd, Hf, Re, and Pt atoms can be used as the hydrogenation catalyst. More specific examples of the hydrogenation catalyst include metallocene compounds containing Ti, Zr, Hf, Co, Ni, Pd, Pt, Ru, Rh, Re, or other metals; supported heterogeneous catalysts in which a metal such as Pd, Ni, Pt, Rh, or Ru is supported on a carrier such as carbon, silica, alumina, or diatomaceous earth; homogeneous Ziegler catalysts in which an organic salt or acetylacetone salt of a metal element such as Ni or Co is combined with a reducing agent such as an organoaluminum; organometallic compounds or complexes of Ru, Rh, or other metals; and fullerenes and carbon nanotubes in which hydrogen is stored.

Among the above exemplary compounds, metallocene compounds containing Ti, Zr, Hf, Co, or Ni are preferred because they allow the hydrogenation reaction to be carried out in a homogeneous system in an inert organic solvent. More preferred are metallocene compounds containing Ti, Zr, or Hf. In particular, hydrogenation catalysts obtained by reaction of titanocene compounds and alkyllithiums are preferred because such catalysts are inexpensive and industrially very useful. Specific examples include hydrogenation catalysts described in, for example, JP H1-275605 A, JP H5-271326 A, JP H5-271325 A, JP H5-222115 A, JP H11-292924 A, JP 2000-37632 A, JP S59-133203 A, JP S63-5401 A, JP

S62-218403 A, JP H7-90017 A, JP S43-19960 B, and JP S47-40473 B, the disclosures of which are incorporated by reference herein. Each of these hydrogenation catalysts may be used alone, or two or more of these may be used in combination.

The amount of the first polymer based on 100% by mass of the rubber component is preferably 60% by mass or more, more preferably 70% by mass or more, still more preferably 75% by mass or more. If the amount of the first polymer is less than 60% by mass, the effects of improving rubber tensile strength and abrasion resistance (especially rubber tensile strength) tend not to be easily achieved. The upper limit of the amount of the first polymer is preferably 95% by mass or less, more preferably 90% by mass or less, still more preferably 85% by mass or less. If the amount exceeds 95% by mass, the incorporation of the second polymer tends to fail to ensure good tear properties.

The rubber composition in the present invention contains a polymer (second polymer) having a double bond-containing diene content within a specific range and a weight average molecular weight within a specific range. The incorporation of the hydrogenated copolymer alone makes it difficult to ensure good tear properties, whereas when the second polymer is incorporated together with the hydrogenated copolymer, the deterioration of tear properties caused by the hydrogenated copolymer can be reduced. Moreover, the second polymer, which shows a cure rate similar to that of the hydrogenated copolymer, has another advantage in that it does not deteriorate the improvement effect of the hydrogenated copolymer.

The cure rate of polymers depends on the number of double bonds they have. Since the second polymer used in the present invention has a smaller double bond-containing diene content (smaller amount of structural units derived from diene compounds) than general-purpose rubbers such as natural rubber, it shows a cure rate similar to that of the hydrogenated copolymer (first polymer).

The second polymer has a double bond-containing diene content of 20% by mass or less, preferably 18% by mass or less, more preferably 15% by mass or less, still more preferably 12% by mass or less. The lower limit of the content is not particularly limited and may be 1% by mass or more.

In the case where the second polymer has been hydrogenated, the double bond-containing diene content can be calculated from the total diene content and the degree of hydrogenation of the diene portion. For example, in the case of a polymer in which the total diene content is 50% by mass and the degree of hydrogenation of the diene portion is 80 mol%, the double bond-containing diene content is calculated as follows: $50 \times (100 - 80)/100 = 10$ (% by mass).

When the second polymer contains a diene portion, examples of diene components forming the diene portion include 1,3-butadiene, isoprene, 1,3-pentadiene, 2,3-dimethylbutadiene, 2-phenyl-1,3-butadiene, 1,3-hexadiene, and 5-ethylidene-2-norbornene (ENB). Each of these monomers may be used alone, or two or more of these may be used in combination. Among these examples, 1,3-butadiene, isoprene, and ENB are preferred, with 1,3-butadiene or ENB being more preferred, in view of practical aspects such as monomer availability and because then the effects of the present invention can be more suitably achieved.

The second polymer has a weight average molecular weight of 200,000 to 2,000,000. With a weight average molecular weight of less than 200,000, good tensile strength or abrasion resistance may not be obtained. With a weight average molecular weight of more than 2,000,000, good processability may not be obtained. The lower limit of the weight average molecular weight is preferably 400,000 or more, while the upper limit is preferably 1,000,000 or less, more preferably 700,000 or less.

The second polymer is not particularly limited as long as it is a polymer having a double bond-containing diene content within the above range and a weight average molecular weight within the above range. Examples include hydrogenated polybutadiene (hydrogenated BR), ethylene-propylene-diene rubber (EPDM), butyl rubber, and halogenated butyl rubber (preferably chlorinated butyl rubber) . Other examples include hydrogenated copolymers having microstructures (especially styrene content) different from that of the first polymer. Each of these polymers may be used alone, or two or more of these may be used in combination. Hydrogenated copolymers having microstructures different from that of the first polymer, hydrogenated BR, EPDM, and halogenated butyl rubber, among others, are preferred because the effects of the present invention can be more suitably achieved.

The hydrogenated copolymers that can be used as the second polymer are the same as those usable as the first polymer. Preferred are hydrogenated styrene-butadiene copolymers (hydrogenated SBR) .

In the case where both the first and second polymers are hydrogenated SBR, the difference in styrene content between both polymers is preferably 4% to 50% by mass, more preferably 5% to 20% by mass.

In the case where the first polymer is hydrogenated SBR and the second polymer is hydrogenated BR, the difference in vinyl group content between both polymers before they are hydrogenated is preferably 7% to 65% by mass, more preferably 10% to 30% by mass.

If the difference is below the lower limit of the range indicated above, the first and second polymers are compatible with each other so that a desired phase structure may not be formed. If the difference exceeds the upper limit of the range, macro phase separation may occur that initiates fracture, thereby resulting in a decrease in rubber tensile strength or abrasion resistance.

The amount of the second polymer based on 100% by mass of the rubber component is preferably 5% by mass

or more, more preferably 10% by mass or more, still more preferably 15% by mass or more. If the amount of the second polymer is less than 5% by mass, a sufficient phase structure tends not to be formed, failing to provide good tear properties. The upper limit of the amount of the second polymer is preferably 40% by mass or less, more preferably 30% by mass or less, still more preferably 25% by mass or less. If the amount of the second polymer is more than 40% by mass, the first polymer tends to fail to provide good rubber tensile strength or abrasion resistance.

The rubber composition in the present invention preferably contains silica. Non-limiting examples of the silica include dry silica (anhydrous silica) and wet silica (hydrous silica) . Wet silica is preferred because it contains a large number of silanol groups.

The silica preferably has a nitrogen adsorption specific surface area ($N_2SA$) of 45 $m^2/g$ or more, more preferably 55 $m^2/g$ or more, still more preferably 60 $m^2/g$ or more, particularly preferably 100 $m^2/g$ or more, most preferably 150 $m^2/g$ or more. With silica having a $N_2SA$ of less than 45 $m^2/g$, abrasion resistance or rubber tensile strength may deteriorate. The $N_2SA$ of the silica is also preferably 350 $m^2/g$ or less, more preferably 300 $m^2/g$ or less, still more preferably 270 $m^2/g$ or less, particularly preferably 220 $m^2/g$ or less. Silica having a $N_2SA$ of more than 350 $m^2/g$ is difficult to disperse, thereby resulting in deterioration of fuel economy.

The nitrogen adsorption specific surface area of the silica is determined by the BET method in conformity with ASTM D3037-81.

In the case where the rubber composition in the present invention contains silica, the amount of the silica per 100 parts by mass of the rubber component is preferably 1 part by mass or more, more preferably 10 parts by mass or more, still more preferably 30 parts by mass or more, particularly preferably 45 parts by mass or more. If the amount is less than 1 part by mass, the incorporation of silica tends to have an insufficient effect resulting in deterioration of fuel economy or abrasion resistance. The amount of the silica is preferably 200 parts by mass or less, more preferably 150 parts by mass or less, still more preferably 120 parts by mass or less, particularly preferably 100 parts by mass or less. If the amount is more than 200 parts by mass, the silica tends not to disperse readily, thereby resulting in deterioration of fuel economy, processability, and abrasion resistance.

The rubber composition in the present invention preferably contains another filler in addition to silica. The term "filler" herein refers to a material that is incorporated into the rubber composition to reinforce rubber. Examples include white fillers such as calcium carbonate, mica (e.g. sericite), aluminum hydroxide, magnesium oxide, magnesium hydroxide, clay, talc, alumina, and titanium oxide, and carbon black. Two or more of these fillers may be used in combination. For reinforcement, carbon black is particularly preferably incorporated.

In the case where the rubber composition in the present invention contains another filler in addition to silica, the amount of the silica based on 100% by mass of the total filler is preferably 80% by mass or more, more preferably 90% by mass or more. If the amount is less than 80% by mass, the effects of the present invention may not be sufficiently achieved. Also in this case, the use of carbon black as the other filler tends to deteriorate wet grip performance, while the use of filler other than carbon black may lead to deterioration of abrasion resistance.

In the case where the rubber composition in the present invention contains carbon black, examples of the carbon black include furnace blacks (furnace carbon blacks) such as SAF, ISAF, HAF, MAF, FEF, SRF, GPF, APF, FF, CF, SCF, and ECF; acetylene blacks (acetylene carbon blacks); thermal blacks (thermal carbon blacks) such as FT and MT; channel blacks (channel carbon blacks) such as EPC, MPC, and CC; and graphite. Each of these carbon blacks may be used alone, or two or more of these may be used in combination.

The carbon black usually has a nitrogen adsorption specific surface area ($N_2SA$) of 5 to 200 $m^2/g$. The lower limit is preferably 50 $m^2/g$, more preferably 80 $m^2/g$, while the upper limit is preferably 150 $m^2/g$, more preferably 120 $m^2/g$. The carbon black also usually has a dibutyl phthalate (DBP) absorption of 5 to 300 mL/100 g. The lower limit is preferably 80 mL/100 g, while the upper limit is preferably 180 mL/100 g. Carbon black having a $N_2SA$ or DBP absorption of less than the lower limit of the range indicated above tends to have only a small reinforcing effect, resulting in reduced abrasion resistance. Carbon black having a $N_2SA$ or DBP absorption of more than the upper limit of the range tends to disperse poorly, resulting in increased hysteresis loss and reduced fuel economy.

The nitrogen adsorption specific surface area is measured in conformity with ASTM D4820-93. The DBP absorption is measured in conformity with ASTM D2414-93.

In the case where the rubber composition in the present invention contains carbon black, the amount of the carbon black per 100 parts by mass of the rubber component is preferably 1 part by mass or more, more preferably 3 parts by mass or more. If the amount is less than 1 part by mass, sufficient reinforcing properties may not be obtained. The amount of the carbon black is preferably 60 parts by mass or less, more preferably 30 parts by mass or less, still more preferably 15 parts by mass or less. If the amount is more than 60 parts by mass, fuel economy tends to deteriorate.

The rubber composition in the present invention preferably incorporates a silane coupling agent together with silica.

The silane coupling agent may be a conventionally known one, and examples include: sulfide silane coupling agents such as bis(3-triethoxysilylpropyl)tetrasulfide, bis(2-triethoxysilylethyl)tetrasulfide, bis(3-trimethoxysilylpropyl)tetrasulfide, bis(2-trimethoxysilylethyl)tetrasulfide, bis(3-triethoxysilylpropyl)trisulfide, bis(3-trimethoxysilylpropyl)trisulfide,

bis(3-triethoxysilylpropyl)disulfide, bis(3-trimethoxysilylpropyl)disulfide, 3-trimethoxysilylpropyl-N,N-dimethylthiocarbamoyltetrasulfide, 3-trimethoxysilylpropylbenzothiazolyltetrasulfide, 3-triethoxysilylpropylbenzothiazoletetrasulfide, 3-triethoxysilylpropyl methacrylate monosulfide, and 3-trimethoxysilylpropyl methacrylate monosulfide; mercapto silane coupling agents such as 3-mercaptopropyltrimethoxysilane, 3-mercaptopropyltriethoxysilane, 2-mercaptoethyltrimethoxysilane, and 2-mercaptoethyltriethoxysilane; vinyl silane coupling agents such as vinyltriethoxysilane and vinyltrimethoxysilane; amino silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; nitro silane coupling agents such as 3-nitropropyltrimethoxysilane and 3-nitropropyltriethoxysilane; and chloro silane coupling agents such as 3-chloropropyltrimethoxysilane, 3-chloropropyltriethoxysilane, 2-chloroethyltrimethoxysilane, and 2-chloroethyltriethoxysilane. Each of these silane coupling agents may be used alone, or two or more of these may be used in combination. In view of the coupling effect produced by the silane coupling agent, processability, and cost, the silane coupling agent is preferably a sulfide silane coupling agent, more preferably bis(3-triethoxysilylpropyl)tetrasulfide or bis(3-triethoxysilylpropyl)disulfide.

The amount of the silane coupling agent per 100 parts by mass of silica is preferably 3 parts by mass or more, more preferably 5 parts by mass or more. If the amount is less than 3 parts by mass, the coupling effect tends to be insufficient, failing to provide high dispersion of silica, and the effects of the present invention also tend not to be sufficiently achieved. Therefore, fuel economy or rubber tensile strength may be reduced. The amount of the silane coupling agent per 100 parts by mass of silica is also preferably 15 parts by mass or less, more preferably 10 parts by mass or less. If the amount is more than 15 parts by mass, excess silane coupling agents may be left in the rubber composition, causing reduction in the processability and tensile properties of the rubber composition.

The rubber composition in the present invention may incorporate compounding agents conventionally used in the rubber industry in addition to the above-described components. Examples include vulcanizing agents such as sulfur; vulcanization accelerators such as thiazole vulcanization accelerators, thiuram vulcanization accelerators, sulfenamide vulcanization accelerators, and guanidine vulcanization accelerators; vulcanization activators such as stearic acid and zinc oxide; organic peroxides; processing aids such as extender oil (oil) and lubricants; and antioxidants.

Examples of the extender oil (oil) include aromatic mineral oils (viscosity gravity constant (V.G.C.): 0.900 to 1.049), naphthenic mineral oils (V.G.C.: 0.850 to 0.899), and paraffinic mineral oils (V.G.C.: 0.790 to 0.849). The polycyclic aromatic content of the extender oil is preferably less than 3% by mass, more preferably less than 1% by mass. The polycyclic aromatic content is measured in conformity with the Institute of Petroleum (IP, U.K.) 346/92 method. The aromatic content (CA) of the extender oil is preferably 20% by mass or more. Two or more of these extender oils may be used in

combination.

Examples of the vulcanization accelerator include thiazole vulcanization accelerators such as 2-mercaptobenzothiazole, dibenzothiazyl disulfide, and N-cyclohexyl-2-benzothiazylsulfenamide; thiuram vulcanization accelerators such as tetramethylthiuram monosulfide and tetramethylthiuram disulfide; sulfenamide vulcanization accelerators such as N-cyclohexyl-2-benzothiazolesulfenamide, N-t-butyl-2-benzothiazolesulfenamide, N-oxyethylene-2-benzothiazolesulfenamide, N-oxyethylene-2-benzothiazolesulfenamide, and N,N'-diisopropyl-2-benzothiazolesulfenamide; and guanidine vulcanization accelerators such as diphenylguanidine, diorthotolylguanidine, and orthotolylbiguanidine. In order to more suitably achieve the effects of the present invention, the vulcanization accelerator is preferably a sulfenamide vulcanization accelerator, more preferably N-cyclohexyl-2-benzothiazolesulfenamide. Further, it is also preferably used in combination with guanidine vulcanization accelerators. The amount of the vulcanization accelerator per 100 parts by mass of the rubber component is preferably 0.1 to 5 parts by mass, more preferably 0.2 to 4 parts by mass.

Non-limiting suitable examples of the vulcanizing agent include sulfur. The amount of the sulfur per 100 parts by mass of the rubber component is preferably 0.5 to 5 parts by mass, more preferably 1 to 3 parts by mass. In such case, the effects of the present invention can be more suitably achieved.

The rubber composition in the present invention can be prepared by usual methods. Specifically, for example, the components described above are kneaded using a Banbury mixer, a kneader, an open roll mill, or other devices, and the kneadate is vulcanized, whereby a rubber composition is prepared.

The rubber composition in the present invention can be used for various tire components, such as treads, sidewalls, carcasses, belts, beads, clinches, or chafers, and is especially suitable for treads of tires. A two-layer tread consists of an outer surface layer (cap tread) and an inner surface layer (base tread).

A multi-layer tread may be produced by assembling sheet-shaped rubber compositions into a predetermined shape, or by feeding rubber compositions into two or more extruders and forming them into a two- or more-layered product at the head outlet of the extruders.

The pneumatic tire of the present invention can be produced from the rubber composition by conventional

methods. Specifically, a rubber composition incorporating a rubber component including first and second polymers and optionally various compounding agent described above, before vulcanization, is extruded and processed into the shape of a tire component such as a tread and assembled with other tire components in a conventional manner on a tire building machine to build an unvulcanized tire. The unvulcanized tire is heat-pressed in a vulcanizer to produce a pneumatic tire of the present invention.

The pneumatic tire of the present invention is suitable for passenger vehicles, trucks and buses, two-wheeled vehicles, racing vehicles, and other vehicles, and especially for passenger vehicles.

EXAMPLES

The present invention is specifically described with reference to, but not limited to, examples below.

The chemicals used in the synthesis or polymerization are listed below. The chemicals were purified as needed by conventional techniques.

n-Hexane: product of Kanto Chemical Co., Inc.
Styrene: product of Kanto Chemical Co., Inc.
Butadiene: 1,3-butadiene available from Tokyo Chemical Industry Co., Ltd.
THF: tetrahydrofuran available from Kanto Chemical Co., Inc.
TMEDA: N,N,N',N'-tetramethylethylenediamine available from Kanto Chemical Co., Inc.
n-Butyllithium solution: 1.6 M solution of n-butyllithium in hexane available from Kanto Chemical Co., Inc.
Ethanol: product of Kanto Chemical Co., Inc.
2,6-Di-tert-butyl-p-cresol: Nocrac 200 available from Ouchi Shinko Chemical Industrial Co., Ltd.
Amine modifier: N,N-bis(trimethylsilyl)-aminopropylmethyldiethoxysilane

The methods for evaluating the prepared polymers are collectively described below.

(Measurement of degree of hydrogenation of conjugated diene portion of polymer)

A 15% by mass solution of each polymer in carbon tetrachloride was prepared to measure a $^1$H-NMR spectrum at 100 MHz. The degree of hydrogenation was calculated from the rate of decrease in the intensity of the $^1$H-NMR spectrum corresponding to unsaturated bonds.

(Structural identification of polymer)

The structural identification (styrene content, vinyl group content, butadiene content (conjugated diene content)) of each polymer was performed using an apparatus (JNM-ECA series available from JEOL Ltd.) . For the measurement, 0.1 g of each unhydrogenated polymer was dissolved in 15 mL of toluene, and the solution was slowly poured into 30 mL of methanol for reprecipitation. The precipitate was dried under reduced pressure prior to the structural identification.

(Measurement of weight average molecular weight (Mw) and number average molecular weight (Mn))

The weight average molecular weight (Mw) and number average molecular weight (Mn) of each polymer were determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards. In the case of polymers containing a modifying group, the Mw and Mn were measured before the polymers were modified. This is because the Mw and Mn of polymers containing a modifying group cannot be accurately determined due to the interaction between the modifying group and the silica gel in the column.

(Measurement of glass transition temperature (Tg))

The glass transition temperature (Tg) was defined as the glass transition onset temperature measured using a differential scanning calorimeter (Q200 available from TA Instruments, Japan) at a temperature increase rate of 10°C/min in conformity with JIS K 7121.

<(Co)polymer Production Examples>

Synthesis Example 1 (Synthesis of polymer (1) : SBR with a degree of hydrogenation of 0 mol%)

To a sufficiently nitrogen-purged heat-resistant reaction vessel were charged 2,000 mL of n-hexane, 60 g of styrene, 140 g of butadiene, 2.5 g of THF, and 0.45 mmol of n-butyllithium, followed by stirring at 50°C for five hours to cause a polymerization reaction. After the reaction was terminated by addition of ethanol, 1 g of 2,6-di-tert-butyl-p-cresol was added to the reaction solution. The resulting solution was purified by reprecipitation to obtain polymer (1). The polymer (1) had a weight average molecular weight (Mw) of 490,000 and a styrene content of 30% by mass.

Synthesis Example 2 (Synthesis of polymer (2) : hydrogenated SBR with a degree of hydrogenation of 60 mol%)

Polymer (2) was produced as in the synthesis of polymer (1), except that the obtained polymer was hydrogenated. Specifically, after the polymerization conversion reaction in the synthesis of polymer (1), the polymerization reaction was not terminated by addition of ethanol. Instead, the reaction solution was then stirred for 20 minutes while supplying hydrogen gas at a pressure of 0.4 MPa gauge to react the unreacted polymer terminal lithium with hydrogen into lithium hydride. Hydrogenation was carried out using a titanocene dichloride-based catalyst at a hydrogen gas supply pressure of 0.7 MPa gauge and a reaction temperature of 90°C. Once the cumulative amount of absorbed hydrogen reached the amount corresponding to the target degree of hydrogenation, the reaction temperature was brought to room temperature and the hydrogen pressure was returned to an ordinary pressure. Thereafter, the reaction solution was drawn from the reaction vessel and introduced into water with stirring. The solvent was removed by steam stripping to obtain polymer (2). The polymer (2) had a degree of hydrogenation of 60 mol% and a weight average molecular weight (Mw) of 500,000.

Synthesis Example 3 (Synthesis of polymer (3): hydrogenated SBR with a degree of hydrogenation of 80 mol%)

Polymer (3) was produced as in the synthesis of polymer (2), except that the cumulative amount of absorbed hydrogen was adjusted so as to correspond to the target degree of hydrogenation. The polymer (3) had a degree of hydrogenation of 80 mol% and a weight average molecular weight (Mw) of 520,000.

Synthesis Example 4 (Synthesis of polymer (4): hydrogenated SBR with a degree of hydrogenation of 95 mol%)

Polymer (4) was produced as in the synthesis of polymer (2), except that the cumulative amount of absorbed hydrogen was adjusted so as to correspond to the target degree of hydrogenation. The polymer (4) had a degree of hydrogenation of 95 mol% and a weight average molecular weight (Mw) of 490,000.

Synthesis Example 5 (Synthesis of polymer (5): hydrogenated modified SBR with a degree of hydrogenation of 95 mol%)

To a sufficiently nitrogen-purged heat-resistant reaction vessel were charged 2,000 mL of n-hexane, 60 g of styrene, 140 g of 1,3-butadiene, 2.5 g of THF, and 0.45 mmol of n-butyllithium, followed by stirring at 50°C for five hours to cause a polymerization reaction. Then, 0.15 mol of an amine modifier was added and stirred at 0°C for one hour. The subsequent procedure was as described in the synthesis of polymer (2), except for the adjustment of the cumulative amount of absorbed hydrogen, thereby obtaining polymer (5). The polymer (5) had a degree of hydrogenation of 95 mol% and a weight average molecular weight (Mw) before the modification of 510,000.

Synthesis Example 6 (Synthesis of polymer (6): hydrogenated BR with a degree of hydrogenation of 95 mol%)

To a sufficiently nitrogen-purged heat-resistant reaction vessel were charged 2,000 mL of cyclohexane, 200 g of butadiene, 0.09 g of TMEDA, and 0.9 mmol of n-butyllithium, followed by stirring at 50°C for five hours to cause a polymerization reaction. The subsequent procedure was as described in the synthesis of polymer (2), except that the cumulative amount of absorbed hydrogen was adjusted so as to correspond to the target degree of hydrogenation, thereby obtaining polymer (6). The polymer (6) had a degree of hydrogenation of 95 mol% and a weight average molecular weight (Mw) of 430,000.

Synthesis Example 7 (Synthesis of polymer (7): hydrogenated SBR with a degree of hydrogenation of 95 mol%)

Polymer (7) was produced as in the synthesis of polymer (4), except that the amounts of styrene and butadiene used were 40 g and 160 g, respectively. The polymer (7) had a degree of hydrogenation of 95 mol% and a weight average molecular weight (Mw) of 500,000.

Synthesis Example 8 (Synthesis of polymer (8): liquid SBR with a degree of hydrogenation of 0 mol%)

To a sufficiently nitrogen-purged 2-L autoclave equipped with a stirrer were charged 1, 000 g of cyclohexane, 20 g of THF, 150 g of butadiene, and 50 g of styrene, and the temperature inside the autoclave was adjusted to 25°C. Next, 2.0 g of n-butyllithium was added to cause polymerization for 15 minutes under heat. The conversion rate of monomers was determined to be 99%. Then, 1.5 g of 2,6-di-t-butyl-p-cresol as an antioxidant was added. Polymer (8) thus produced had a weight average molecular weight (Mw) of 10,000.

Synthesis Example 9 (Synthesis of polymer (9): hydrogenated liquid SBR with a degree of hydrogenation of 58 mol%)

To a pressure-resistant vessel were charged 200 g of polymer (8), 300 g of THF, and 10 g of 10% palladium/carbon. The vessel was purged with nitrogen and subsequently with hydrogen at a pressure of 5.0 $kg/cm^2$ to cause a reaction at 80°C. Polymer (9) thus produced had a degree of hydrogenation of 58 mol% and a weight average molecular weight (Mw) of 10,000.

Synthesis Example 10 (Synthesis of polymer (10): hydrogenated liquid SBR with a degree of hydrogenation of 81 mol%)

Polymer (10) was synthesized as described above, except that the amount of the catalyst, the hydrogen pressure, and the like were changed. The polymer (10) had a degree of hydrogenation of 81 mol% and a weight average molecular weight (Mw) of 10,000.

[Table 1]

| | Polymer | | | | | | | | | |
|---|---|---|---|---|---|---|---|---|---|---|
| | (1) | (2) | (3) | (4) | (5) | (6) | (7) | (8) | (9) | (10) |
| Degree of hydrogenation (mol%) | 0 | 60 | 80 | 95 | 95 | 95 | 95 | 0 | 58 | 81 |
| Styrene content (% by mass) | 30 | 30 | 30 | 30 | 30 | 0 | 20 | 30 | 30 | 30 |
| Vinyl group content (% by mass) | 50 | 51 | 50 | 51 | 49 | 30 | 50 | 30 | 51 | 51 |
| Butadiene content (% by mass) | 70 | 70 | 70 | 70 | 70 | 100 | 80 | 70 | 70 | 70 |
| Double bond-containing butadiene content (% by mass) | 70 | 28 | 14 | 3.5 | 3.5 | 5 | 4 | 70 | 29.4 | 13.3 |
| Weight average molecular weight (Mw) | 490,000 | 500,000 | 520,000 | 490,000 | 510,000 | 430,000 | 500,000 | 10,000 | 10,000 | 10,000 |
| Mw/Mn | 1.23 | 1.13 | 1.24 | 1.19 | 1.22 | 1.24 | 1.21 | 1.24 | 1.18 | 1.21 |
| Glass transition temperature (Tg) (°C) | -30 | -31 | -30 | -30 | -30 | -55 | -36 | -30 | -30 | -30 |

The chemicals used in the examples and comparative examples are listed below.

Polymers (1) to (10): polymers synthesized as above
EPDM: Esprene EPDM505A (diene component: ENB, double bond-containing diene content: 9.5% by mass, Mw: 200,000) available from Sumitomo Chemical Co., Ltd.
Chlorinated butyl rubber: CHLOROBUTYL 1066 (diene component: isoprene, double bond-containing diene content: 2% by mass, Mw: 520,000) available from ExxonMobil
Natural rubber: TSR20 (diene component: isoprene, double bond-containing diene content: 100% by mass)
Carbon black: Diablack N339 ($N_2SA$: 96 $m^2/g$, DBP absorption: 124 mL/100 g) available from Mitsubishi Chemical Corporation
Oil: X-140 available from JX Nippon Oil & Energy Corporation
Silica: ULTRASIL VN3 ($N_2SA$: 180 $m^2/g$) available from Evonik
Silane coupling agent: Si69 (bis(3-triethoxysilylpropyl)tetrasulfide) available from Evonik
Antioxidant: Antigene 3C available from Sumitomo Chemical Co., Ltd.
Stearic acid: stearic acid beads "TSUBAKI" available from NOF Corporation
Zinc oxide: zinc oxide #1 available from Mitsui Mining & Smelting Co., Ltd.
Wax: Sunnoc N available from Ouchi Shinko Chemical Industrial Co., Ltd.
Sulfur: Sulfur powder available from Tsurumi Chemical Industry Co., Ltd.
Vulcanization accelerator (1): Soxinol CZ (N-cyclohexyl-2-benzothiazolylsulfenamide) available from Sumitomo Chemical Co., Ltd.
Vulcanization accelerator (2): Soxinol D (1,3-diphenylguanidine) available from Sumitomo Chemical Co., Ltd.

(Examples and Comparative Examples)

According to the formulations shown in Table 2, the materials other than the sulfur and vulcanization accelerators were kneaded for five minutes at 150°C using a 1.7-L Banbury mixer (available from Kobe Steel, Ltd.) to give a kneadate. Next, the sulfur and vulcanization accelerators were added to the kneadate, followed by kneading for five minutes at 80°C using an open roll mill to give an unvulcanized rubber composition. The unvulcanized rubber composition was press-vulcanized for 20 minutes at 170°C in a 0.5 mm-thick die to obtain a vulcanized rubber composition.
Separately, the unvulcanized rubber composition was formed into the shape of a tread or a sidewall and assembled with other tire components, followed by vulcanization at 170°C for 20 minutes to obtain a test tire.

<Evaluation items and test methods>

The vulcanized rubber compositions and test tires prepared as above were evaluated for the following items . Table 2 shows the results.

(Rubber tensile strength)

No. 3 dumbbell specimens prepared from the vulcanized rubber compositions were subjected to a tensile test in conformity with "Rubber, vulcanized or thermoplasticsDetermination of tensile stress-strain properties" set forth in JIS K 6251 to measure the elongation at break (EB) and tensile strength at break (TB). The value EB × TB calculated for each formulation example is expressed as an index using the equation below, with Comparative Example 1 set equal to 100. A higher index indicates higher rubber tensile strength.

$$(\text{Rubber tensile strength index}) = (\text{EB} \times \text{TB of each formulation example})/(\text{EB} \times \text{TB of Comparative Example 1}) \times 100$$

(Abrasion resistance)

The volume loss of each vulcanized rubber composition was measured with a laboratory abrasion and skid tester (LAT tester) at a load of 50 N, a speed of 20 km/h, and a slip angle of 5 degrees. The volume losses are expressed as an index, with Comparative Example 1 set equal to 100. A higher index indicates better abrasion resistance.

(Fuel economy)

The tan δ of the vulcanized rubber compositions was measured at a dynamic strain amplitude of 1%, a frequency

of 10 Hz, and a temperature of 50°C using a spectrometer (available from Ueshima Seisakusho Co., Ltd.). The reciprocals of the tan $\delta$ values are expressed as an index, with Comparative Example 1 set equal to 100. A higher index indicates a smaller rolling resistance, which means better fuel economy.

(Tear properties (Tear strength))

Unnicked angle test pieces prepared from the vulcanized rubber compositions were subjected to a tear test in conformity with "Rubber, vulcanized or thermoplastic -- Determination of tear strength" set forth in JIS K 6252 to measure the tear properties (N/mm). The tear properties are expressed as an index (tear property index) using the equation below, with Comparative Example 1 set equal to 100. A higher index indicates better tear properties. Indices of 90 or higher are considered good.

$$(\text{Tear property index}) = (\text{Tear properties measured for each formulation example})/(\text{Tear properties measured for Comparative Example 1}) \times 100$$

(Ozone resistance)

Ozone resistance was evaluated in conformity with "Rubber, vulcanized or thermoplastic -- Determination of ozone resistance" set forth in JIS K 6259. After the prepared test tires were run 30,000 km in a room controlled at a temperature of 40°C and an ozone concentration of 50 ppm, they were visually observed to determine the number and depth of cracks on the sidewall surface. The results were rated on the 5-point scale below. A higher score indicates better ozone resistance. Scores of 4 or higher are considered acceptable.

5: No cracks, Excellent
4: Very few cracks with almost no depth, Good
3: Small number of cracks having a low degree of depth
2: Moderate number of cracks having a moderate degree of depth
1: Large number of cracks having a high degree of depth

(Heat resistance)

The vulcanized rubber compositions (fresh samples) were thermally degraded in an oven at 80 °C for seven days to prepare thermally aged samples.

No. 3 dumbbell specimens prepared from the fresh samples and thermally aged samples were subjected to a tensile test in conformity with "Rubber, vulcanized or thermoplasticsDetermination of tensile stress-strain properties" set forth in JIS K 6251 to measure the elongation at break (EB) and tensile strength at break (TB). The value EB $\times$ TB calculated for the thermally aged sample of each formulation example is expressed as an index (heat resistance index), with the corresponding fresh sample set equal to 100. An index closer to 100 indicates less thermal aging compared to the fresh sample, which means better heat resistance (better thermal degradation resistance).

[Table 2]

| | | Degree of hydrogenation (mol%) | Comparative Example | | | | | | | Example | | | | Comparative Example | | | Example | | | Comparative Example |
|---|---|---|---|---|---|---|---|---|---|---|---|---|---|---|---|---|---|---|---|---|
| | | | 1 | 2 | 3 | 4 | 5 | 6 | 7 | 1 | 2 | 3 | 4 | 8 | 9 | 10 | 5 | 6 | 7 | 11 |
| Formulation (parts by mass) | Polymer (1) SBR | 0 | 100 | — | — | — | — | — | — | — | — | — | — | — | — | — | — | — | — | — |
| | Polymer (2) Hydrogenated SBR | 60 | — | 100 | — | — | — | — | — | — | — | — | — | — | — | — | — | — | — | 80 |
| | Polymer (3) Hydrogenated SBR | 80 | — | — | 100 | — | — | — | — | — | — | — | — | — | — | — | — | — | 80 | — |
| | Polymer (4) Hydrogenated SBR | 95 | — | — | — | 100 | — | — | — | — | — | — | — | — | — | — | — | 80 | — | — |
| | Polymer (5) Hydrogenated modified SBR | 95 | — | — | — | — | 100 | 90 | 70 | 80 | 80 | 80 | 80 | 100 | 100 | 100 | 72 | — | — | — |
| | Polymer (6) Hydrogenated BR | 95 | — | — | — | — | — | — | — | 20 | — | — | — | — | — | — | 18 | 20 | 20 | 20 |
| | Polymer (7) Hydrogenated SBR | 95 | — | — | — | — | — | — | — | — | 20 | — | — | — | — | — | — | — | — | — |
| | EPDM | — | — | — | — | — | — | — | — | — | — | 20 | — | — | — | — | — | — | — | — |
| | Chlorinated butyl rubber | — | — | — | — | — | — | — | — | — | — | — | 20 | — | — | — | — | — | — | — |
| | Natural rubber | — | — | — | — | — | — | 10 | 30 | — | — | — | — | — | — | — | 10 | — | — | — |
| | Carbon black | — | 5 | 5 | 5 | 5 | 5 | 5 | 5 | 5 | 5 | 5 | 5 | 5 | 5 | 5 | 5 | 5 | 5 | 5 |
| | Polymer (8) Liquid SBR | 0 | — | — | — | — | — | — | — | — | — | — | — | 20 | — | — | — | — | — | — |
| | Polymer (9) Hydrogenated liquid SBR | 58 | — | — | — | — | — | — | — | — | — | — | — | — | 20 | — | — | — | — | — |
| | Polymer (10) Hydrogenated liquid SBR | 81 | — | — | — | — | — | — | — | — | — | — | — | — | — | 20 | — | — | — | — |
| | Oil | — | 25 | 25 | 25 | 25 | 25 | 25 | 25 | 25 | 25 | 25 | 25 | 25 | 25 | 25 | 25 | 25 | 25 | 25 |
| | Silica | — | 75 | 75 | 75 | 75 | 75 | 75 | 75 | 75 | 75 | 75 | 75 | 75 | 75 | 75 | 75 | 75 | 75 | 75 |
| | Silane coupling agent | — | 6 | 6 | 6 | 6 | 6 | 6 | 6 | 6 | 6 | 6 | 6 | 6 | 6 | 6 | 6 | 6 | 6 | 6 |
| | Antioxidant | — | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Stearic acid | — | 2 | 2 | 2 | 2 | 2 | 2 | 2 | 2 | 2 | 2 | 2 | 2 | 2 | 2 | 2 | 2 | 2 | 2 |
| | Zinc oxide | — | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Wax | — | 1 | 1 | 1 | 1 | 1 | 1 | 1 | 1 | 1 | 1 | 1 | 1 | 1 | 1 | 1 | 1 | 1 | 1 |
| | Sulfur | — | 2 | 2 | 2 | 2 | 2 | 2 | 2 | 2 | 2 | 2 | 2 | 2 | 2 | 2 | 2 | 2 | 2 | 2 |
| | Vulcanization accelerator (1) | — | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator (2) | — | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Rubber tensile strength index | | 100 | 100 | 195 | 210 | 212 | 147 | 84 | 220 | 215 | 205 | 201 | 195 | 206 | 208 | 151 | 215 | 201 | 115 |
| | Abrasion resistance index | | 100 | 100 | 120 | 135 | 138 | 130 | 115 | 145 | 135 | 136 | 134 | 127 | 129 | 130 | 129 | 141 | 123 | 110 |
| | Fuel economy index | | 100 | 100 | 99 | 99 | 108 | 104 | 105 | 105 | 104 | 97 | 98 | 101 | 104 | 104 | 103 | 96 | 97 | 98 |
| | Tear property index | | 100 | 80 | 60 | 50 | 50 | 95 | 110 | 120 | 115 | 117 | 113 | 53 | 60 | 55 | 101 | 124 | 126 | 111 |
| | Ozone resistance | | 2 | 3 | 4 | 5 | 5 | 5 | 4 | 5 | 5 | 5 | 5 | 5 | 5 | 5 | 5 | 5 | 4 | 3 |
| | Heat resistance index | | 75 | 85 | 91 | 98 | 97 | 92 | 83 | 96 | 98 | 98 | 97 | 95 | 96 | 97 | 91 | 95 | 90 | 86 |

Table 2 shows that, in Examples 1 to 7, the fuel economy, rubber tensile strength, abrasion resistance, heat resistance, and ozone resistance were well-improved, and further the tear properties were maintained in a favorable range or improved. It is thus demonstrated that the use of a rubber composition that contained a hydrogenated copolymer (first polymer (polymer (3), (4), or (5))) having a degree of hydrogenation of 75 mol% or more, and further contained a polymer (second polymer (polymer (6) or (7), EPDM, or chlorinated butyl rubber)) having a double bond-containing diene content within a specific range and a weight average molecular weight within a specific range enabled a balanced improvement in fuel economy, rubber tensile strength, abrasion resistance, tear properties, heat resistance, and ozone resistance.

## Claims

1. A pneumatic tire, formed from a rubber composition,
the rubber composition comprising a first polymer and a second polymer,
the first polymer being a hydrogenated copolymer that contains a structural unit derived from an aromatic vinyl compound and a structural unit derived from a conjugated diene compound and has a degree of hydrogenation of the conjugated diene portion of 75 mol% or more,
the second polymer having a double bond-containing diene content of 20% by mass or less and a weight average molecular weight of 200,000 to 2,000,000,
wherein the second polymer is at least one selected from the group consisting of hydrogenated copolymers having microstructures different from that of the first polymer, hydrogenated polybutadiene, ethylene-propylene-diene rubber, and halogenated butyl rubber.

2. The pneumatic tire according to claim 1,
wherein the first polymer has a weight average molecular weight of 200,000 to 2,000,000.

3. The pneumatic tire according to claim 1 or 2,
wherein the first polymer has a degree of hydrogenation of 90 mol% or more.

4. The pneumatic tire according to any one of claims 1 to 3,
wherein the first polymer is a hydrogenated styrene-butadiene copolymer.

5. The pneumatic tire according to claim 4,
wherein the first polymer is a hydrogenated modified styrene-butadiene copolymer.

6. The pneumatic tire according to claim 4 or 5,
wherein the first polymer has a styrene content of 5% to 40% by mass.

## Patentansprüche

1. Luftreifen, gebildet aus einer Kautschukzusammensetzung,

   wobei die Kautschukzusammensetzung ein erstes und ein zweites Polymer umfasst,
   wobei das erste Polymer ein hydriertes Copolymer ist, das eine Struktureinheit, die von einer aromatischen Vinylverbindung abgeleitet ist, und eine Struktureinheit, die von einer konjugierten Dienverbindung abgeleitet ist, enthält und einen Hydrierungsgrad des Anteils des konjugierten Diens von 75 mol% oder mehr aufweist,
   wobei das zweite Polymer einen Anteil an doppelbindungshaltigem Dien von 20 Massenprozent oder weniger und ein gewichtsmittleres Molekulargewicht von 200.000 bis 2.000.000 aufweist,
   wobei das zweite Polymer mindestens eines ist ausgewählt aus der Gruppe bestehend aus hydrierten Copolymeren mit anderen Mikrostrukturen als das erste Polymer, hydriertem Polybutadien, Ethylen-Propylen-Dien-Kautschuk und halogeniertem Butylkautschuk.

2. Luftreifen nach Anspruch 1, wobei das erste Polymer ein gewichtsmittleres Molekulargewicht von 200.000 bis 2.000.000 aufweist.

3. Luftreifen nach Anspruch 1 oder 2, wobei das erste Polymer einen Hydrierungsgrad von 90 mol% oder mehr aufweist.

4. Luftreifen nach einem der Ansprüche 1 bis 3, wobei das erste Polymer ein hydriertes Styrol-Butadien-Copolymer ist.

5. Luftreifen nach Anspruch 4, wobei das erste Polymer ein hydriertes modifiziertes Styrol-Butadien-Copolymer ist.

6. Luftreifen nach Anspruch 4 oder 5, wobei das erste Polymer einen Styrolgehalt von 5 bis 40 Gewichtsprozent aufweist.

**Revendications**

1. Bandage pneumatique réalisé à partir d'une composition en caoutchouc,
la composition en caoutchouc comprenant un premier polymère et un deuxième polymère,
le premier polymère étant un copolymère hydrogéné qui contient une unité structurelle dérivée d'un composé vinyl aromatique et une unité structurelle dérivée d'un composé de diène conjugué, et ayant un degré d'hydrogénation de la portion de diène conjugué de 75 moles % ou plus,
le deuxième polymère ayant une teneur en diène contenant une double liaison de 20 % en masse ou moins, et un poids moléculaire moyen pondéral de 200 000 à 2 000 000,
dans lequel le deuxième polymère est au moins un élément sélectionné parmi le groupe constitué de copolymères hydrogénés ayant des microstructures différentes de celles du premier polymère, polybutadiène hydrogéné, caoutchouc éthylène propylène diène, et caoutchouc butyle halogéné.

2. Bandage pneumatique selon la revendication 1,
dans lequel le premier polymère a un poids moléculaire moyen pondéral de 200 000 à 2 000 000.

3. Bandage pneumatique selon la revendication 1 ou 2,
dans lequel le premier polymère a un degré d'hydrogénation de 90 moles % ou plus.

4. Bandage pneumatique selon l'une quelconque des revendications 1 à 3,
dans lequel le premier polymère est un copolymère styrène butadiène hydrogéné.

5. Bandage pneumatique selon la revendication 4,
dans lequel le premier polymère est un copolymère styrène butadiène modifié hydrogéné.

6. Bandage pneumatique selon la revendication 4 ou 5,
dans lequel le premier polymère a une teneur en styrène de 5 % à 40 % en masse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2757131 A1
- EP 1258498 A1
- JP 2000344955 A
- JP H2147647 A
- JP H1275605 A
- JP H5271326 A
- JP H5271325 A
- JP H5222115 A
- JP H11292924 A
- JP 2000037632 A
- JP S59133203 A
- JP S635401 A
- JP S62218403 A
- JP H790017 A
- JP S4319960 B
- JP S4740473 B